# DEMANDE DE BREVET EUROPEEN

(11) **EP 1 321 216 A1**
(43) Date de publication de la demande: **25.06.2003**
(21) Numéro de dépôt: 02356248.1
(22) Date de dépôt: 29.11.2002
(51) Int. Cl.: B23K 26/08

(54) **Dispositif d'usinage de pièces à l'aide d'un faisceau laser**

(30) Priorité: 30.11.2001 FR 0115547
(71) Demandeur: TECHNIFOR, 01700 Miribel (FR)
(72) Inventeur: Therond, Marcel, 69140 Rillieux la Pape (FR)
(74) Mandataire: Schouller, Jean-Philippe

(57) **Abrégé**

Ce dispositif d'usinage comprend un laser (2), apte à émettre un faisceau laser (f₁), un premier miroir de renvoi (8) placé sur le trajet du faisceau émis (f₁), afin de renvoyer un faisceau intermédiaire (f₂), et un second miroir de renvoi (12) placé sur le trajet de ce faisceau intermédiaire, de façon à diriger un faisceau d'usinage (f₃) vers les pièces à traiter.

Ce dispositif comprend en outre des moyens permettant de déplacer ces miroirs de renvoi par rapport au châssis, ces moyens de déplacement comprenant au moins un moteur linéaire principal (4, 10).

## Description

La présente invention concerne un dispositif d'usinage de pièces à l'aide d'un faisceau laser.

On entend par usinage, au sens de l'invention, toute opération consistant à diriger un faisceau laser vers une pièce, de façon à traiter celle-ci. On citera, de manière indicative mais non limitative, les applications du marquage, du gravage, de la fusion de matériaux tels que par exemple de la poudre, ou bien encore de la découpe au moyen d'un tel faisceau laser.

De façon connue, un tel dispositif d'usinage comporte un laser, apte à émettre un faisceau, ainsi que des premier et second miroirs de renvoi. Le premier de ces miroirs est placé sur le trajet du faisceau émis par le laser, de manière à former un faisceau intermédiaire.

Par ailleurs, le second miroir de renvoi, qui est placé sur le trajet du faisceau intermédiaire précité, est propre à créer un faisceau d'usinage, susceptible d'être dirigé vers les pièces à traiter. L'orientation de ces deux miroirs peut être modifiée, par exemple en faisant appel à des moteurs rotatifs.

La présente invention se propose de réaliser un dispositif d'usinage, du type précité, dans lequel le positionnement des deux miroirs de renvoi peut être modifié de manière particulièrement souple et aisée.

Elle vise également à proposer un tel dispositif d'usinage qui, tout en possédant une légèreté suffisante, garantisse un positionnement précis de ces miroirs de renvoi et soit soumis, en service, seulement à de faibles frottements.

A cet effet, l'invention a pour objet un dispositif d'usinage de pièces à l'aide d'un faisceau laser, comprenant un châssis, un laser apte à émettre un faisceau laser, des premier et second miroirs de renvoi, montés sur ce châssis, le premier miroir de renvoi étant apte à être placé sur le trajet dudit faisceau émis, afin de renvoyer un faisceau intermédiaire, alors que le second miroir de renvoi est apte à être placé sur le trajet de ce faisceau intermédiaire, de façon à diriger un faisceau d'usinage vers les pièces à traiter, ainsi que des moyens permettant de déplacer ces miroirs de renvoi par rapport au châssis, ces moyens de déplacement comprenant au moins un moteur linéaire principal.

L'invention va être décrite ci-après, en référence aux dessins annexés, donnés uniquement à titre d'exemples non limitatifs, dans lesquels :
- la figure 1 est une vue en perspective illustrant un dispositif d'usinage à l'aide d'un faisceau laser, conforme à un premier mode de réalisation de l'invention ;
- la figure 2 est une vue en perspective illustrant un dispositif d'usinage conforme à un deuxième mode de réalisation de l'invention ;
- la figure 2b est une vue en perspective, à plus grande échelle, illustrant un détail du dispositif d'usinage de la figure 2 ;
- la figure 3 est une vue en perspective, analogue à la figure 2, illustrant un dispositif d'usinage conforme à un troisième mode de réalisation de l'invention ;
- la figure 4 est une vue en perspective illustrant le dispositif d'usinage illustré à la figure 2, associé à deux caissons de travail ; et
- la figure 5 est une vue de côté, illustrant un dispositif d'usinage conforme à un quatrième mode de réalisation de l'invention.

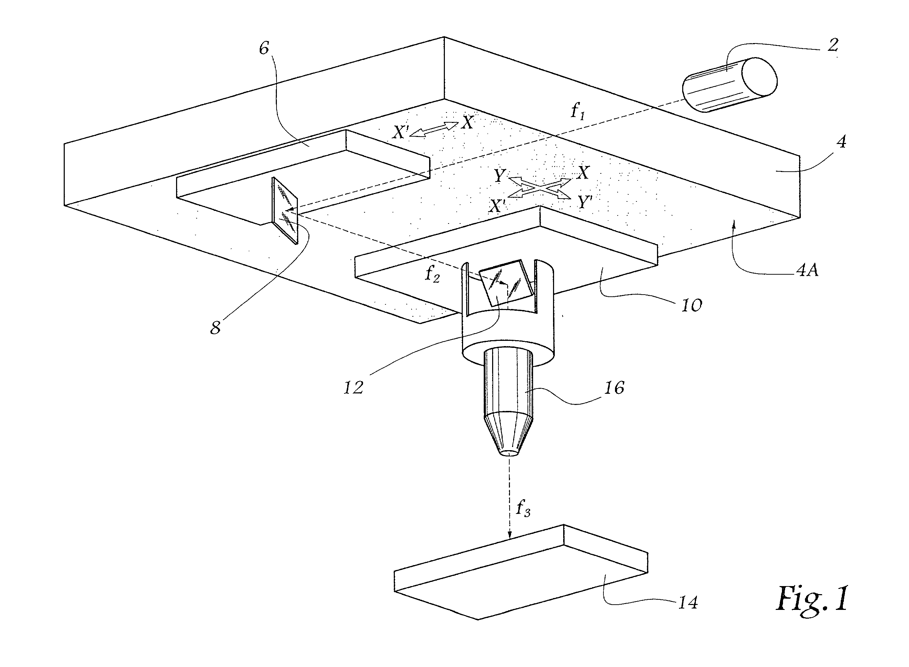

Le dispositif d'usinage représenté à la figure 1, comprend un laser, par exemple de type CO₂ ou YAG, qui assure l'émission d'un faisceau f₁. Dans l'exemple illustré, ce faisceau est horizontal.

Il est par ailleurs prévu un châssis, non représenté, pourvu d'une potence, également non représentée, sur laquelle est monté un élément fixe 4, de forme globalement parallélépipédique. Ce dernier coopère avec un premier élément mobile 6, qui est susceptible de se déplacer, selon une unique direction X-X', au voisinage de la face inférieure 4A de l'élément fixe 4.

Comme cela sera explicité dans ce qui suit, le déplacement de cet élément mobile 6 par rapport à l'élément fixe 4 est réalisé en tirant parti du phénomène d'induction. Cet élément mobile 6 supporte un premier miroir de renvoi 8, qui y est fixé par tout moyen approprié.

En service, le faisceau f₁ se déplace selon la direction X-X', qui correspond à la direction de déplacement de l'élément mobile 6. Le premier miroir 8 renvoie le faisceau émis f₁, en le déviant par exemple de 90°, à savoir selon Y-Y', tout en le maintenant dans le plan horizontal. Ceci conduit à l'obtention d'un faisceau intermédiaire, désigné par la référence f₂.

Il est par ailleurs prévu un deuxième élément mobile, propre à se déplacer au voisinage de la face inférieure 4A, selon deux directions perpendiculaires entre elles. La première de ces directions, X-X', correspond à celle du déplacement de l'élément mobile 6, alors que la seconde de ces directions est matérialisée par les repères Y-Y'.

Comme dans le cas du premier élément 6, le déplacement du second élément mobile 10, par rapport à l'élément fixe 4, est mis en oeuvre en faisant appel au phénomène d'induction.

Un second miroir de renvoi 12, fixé sur le second élément mobile 10, est interposé sur le trajet de faisceau intermédiaire f₂. Ce miroir 12 permet de renvoyer ce faisceau vers le bas, ce qui conduit à l'obtention d'un faisceau d'usinage f₃, propre à être dirigé vers une pièce à traiter 14.

Il est à noter qu'un objectif de focalisation 16 est interposé sur le trajet du faisceau d'usinage f₃. Une telle mesure permet de concentrer ce faisceau, ce qui contribue à le rendre à la fois plus étroit et plus puissant. La pièce à usiner 14 est avantageusement placée dans le plan focal de cet objectif 16, ce qui en assure un traitement efficace.

On va désormais revenir à l'élément fixe 4, ainsi qu'aux deux éléments mobiles 6 et 10.

Cet élément fixe 4 inducteur, formant stator, et l'élément mobile 10 induit, formant chariot, constituent un moteur linéaire plan principal. Ils sont par exemple conformes à ceux décrits dans le brevet français 2 777 217 déposé le 10 avril 1998, qui est incorporé par référence dans la présente description.

Ainsi, l'élément mobile 10 est réalisé sous forme de quatre modules, dont chacun comprend une bobine et son noyau magnétique associé. En faisant varier les caractéristiques du courant dans ces différentes bobines, il est possible de déplacer le chariot 10 selon les deux directions X-X' et Y-Y'.

Il est à noter qu'un passage d'air, non représenté, est ménagé dans le corps de l'élément mobile 10, ce qui permet la formation, en service, d'un coussin d'air entre les faces en regard de l'élément mobile 10 et de l'élément fixe 4. L'alimentation électrique des bobines est assurée, de façon connue, par des lignes non représentées.

De façon analogue, l'élément fixe 4 et l'élément mobile 6 forment un autre moteur linéaire plan, dont la structure est analogue à celle du moteur principal exposé ci-dessus.

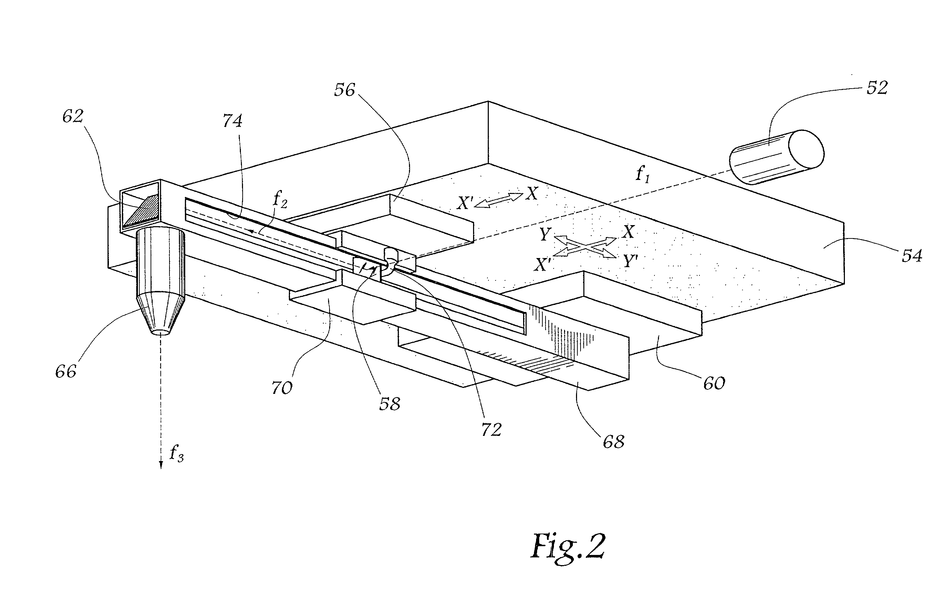

Les figures 2 et 2b illustrent une première variante de réalisation de l'invention. Sur ces figures, les éléments mécaniques analogues à ceux de la figure 1 sont affectés des mêmes numéros de référence, augmentés de 50.

Le chariot principal 60 supporte un bras allongé tubulaire 68, s'étendant selon la direction Y-Y'. Ce bras 68 pénètre dans un collier de guidage 70, monté sur le chariot annexe 56.

Le premier miroir de renvoi 58 est solidarisé au premier chariot mobile 56. A cet effet, il est prévu une tige coudée 72, dont une première extrémité est montée sur les parois latérales du collier 70, alors que son autre extrémité, qui porte le miroir 58, est disposée à l'intérieur du bras tubulaire 68.

Le second miroir de renvoi 62 se trouve placé à l'extrémité du bras 68 opposée au chariot principal 60. De la sorte, ce miroir 62 est solidaire, en translation, du chariot 60. Par ailleurs, une des parois latérales de ce bras 68 est creusée d'une échancrure longitudinale 74, destinée au passage du faisceau laser f₁, émis par le laser 52, ainsi qu'au passage de la tige coudée 72 supportant le miroir 58.

Le fonctionnement du dispositif d'usinage, illustré sur ces figures 2 et 2b, est analogue à celui du dispositif de la figure 1.

Ainsi, le laser 52 dirige le faisceau f_{1,} via l'échancrure 74 , vers le premier miroir 58, qui renvoie le faisceau intermédiaire f₂ vers le second miroir 62. Ce dernier dirige alors, vers le bas, un faisceau d'usinage f₃, avec interposition de l'objectif de focalisation 66.

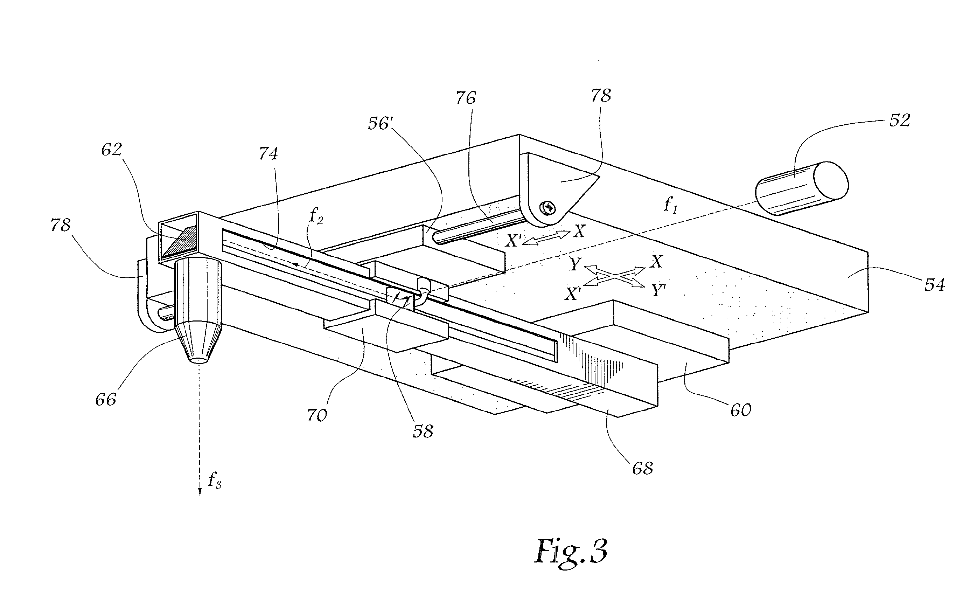

La figure 3 illustre une seconde variante de réalisation de l'invention. Le dispositif d'usinage, représenté sur cet figure 3, diffère de celui de la figure 2, en ce sens que le chariot 56' n'est pas moteur, contrairement à celui 56 de la figure 2.

Ainsi, ce chariot passif 56' est monté sur une barre de guidage 76, fixée sur deux joues 78 solidaires de l'élément fixe 54. De la sorte, le déplacement du chariot 56', selon la direction X-X', est imparti par le propre déplacement de l'élément mobile principal 60, qui se trouve toujours moteur.

Les modes de réalisation décrits en référence aux figures 2 et 3, faisant appel à un bras 68, présentent des avantages spécifiques.

En effet, ils permettent d'atteindre des pièces situées en déport par rapport à l'élément fixe 4. De la sorte, la zone où est placée la pièce à marquer se trouve encombrée, uniquement lors de l'opération de marquage, le bras 68 pouvant être retiré, selon la direction Y-Y', une fois cette opération terminée.

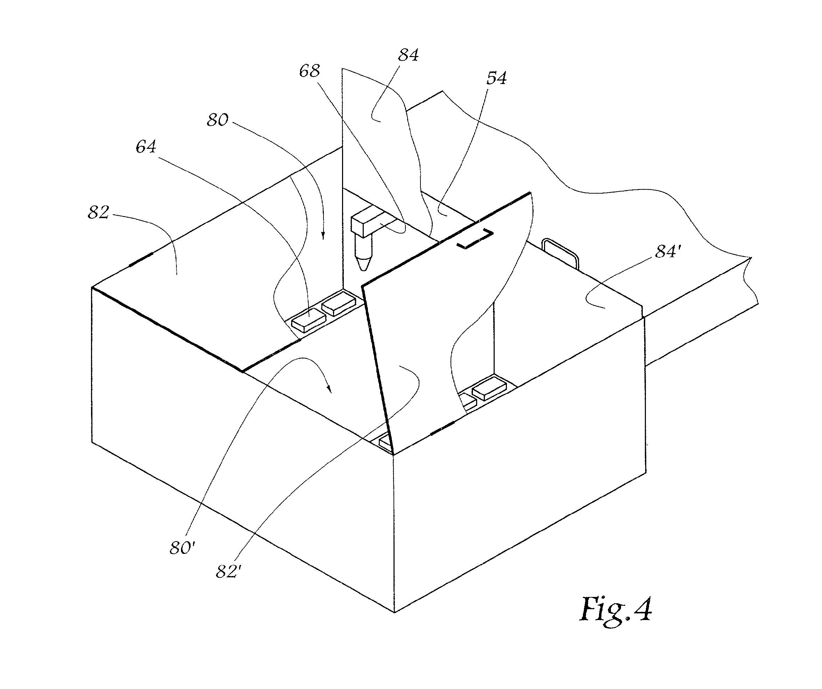

Comme le montre la figure 4, le dispositif d'usinage des figures 2 et 3, tirant parti du bras 68, peut être associé à deux chambres 80, 80', disposées l'une à côté de l'autre. Chaque chambre, qui est étanche à la lumière, se trouve munie d'une porte supérieure 82, 82', ainsi que d'une trappe frontale 84, 84'.

En fonctionnement, l'une 80 des chambres se trouve en service, en ce sens que le bras 68 y pénètre, de manière à traiter les pièces placées dans cette chambre. A cet effet, la trappe 84 est ouverte, alors que la porte d'accès 82 est fermée.

Pendant ce temps, l'opérateur est susceptible d'accéder au volume intérieur de l'autre 80' de ces chambres, de façon totalement sécurisée. Pour ce faire, la trappe 84' se trouve fermée, alors que la porte 82' est ouverte. L'opérateur est ainsi à l'abri d'une réflexion accidentelle du faisceau laser.

En vue de conférer une sécurité maximale, il est possible d'interdire, par exemple de manière automatique, l'ouverture de l'une des portes 82, 82', lorsque le bras 68 se trouve dans la chambre correspondante. L'opérateur est ainsi à l'abri de manoeuvres inadaptées de sa part.

A titre de variante supplémentaire, non représentée, il est envisageable de disposer l'élément fixe 54, ainsi que les éléments mobiles, respectivement 56 ou 56', ainsi que 60, à l'intérieur d'un boîtier.

Dans cette optique, le bras 58 fait alors saillie hors. du boîtier, en étant libre de coulisser selon sa direction principale par rapport à l'élément de support disposé dans une ouverture du boîtier. Par ailleurs, cet élément de support est propre à se déplacer transversalement par rapport à la direction principale du bras, alors que des moyens sont prévus pour maintenir l'étanchéité du boîtier, lors du déplacement de cet élément de support.

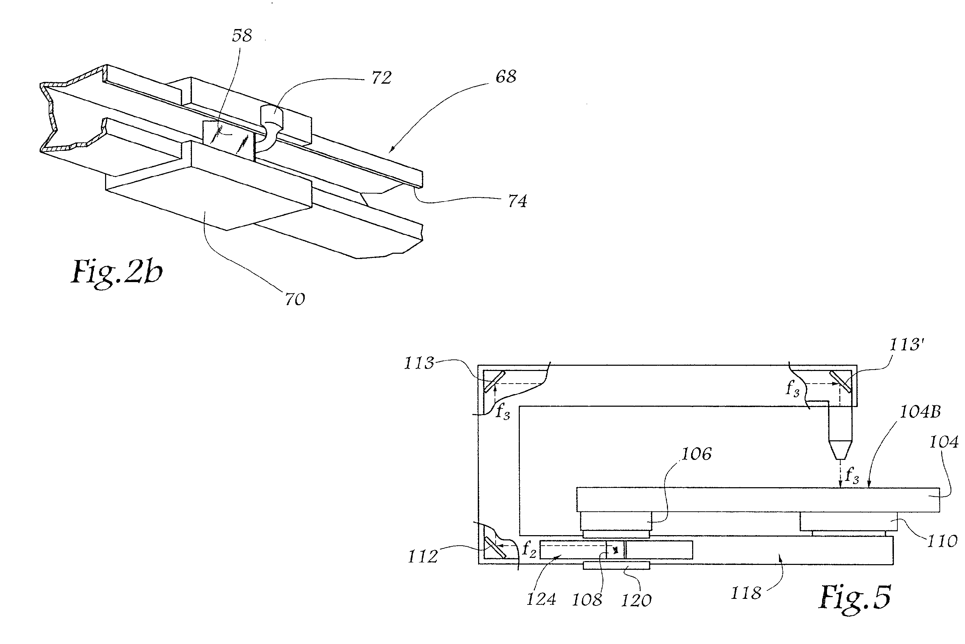

Un agencement de ce type est décrit dans le brevet français 2 777 217 précité, aux figures 5 à 9.

La figure 5 illustre une dernière variante de réalisation de l'invention. Sur cette figure, les éléments mécaniques analogues à ceux des figures 2 et 3 sont affectés des mêmes numéros de référence, augmentés de 50.

Le chariot mobile 110 du dispositif d'usinage de cette figure 5 supporte un bras 118 présentant, vue de côté, une forme globale de U. Ce bras 118 pénètre dans un collier de guidage 120, monté sur le chariot mobile 106. Il convient de noter que celui-ci peut être moteur, comme sur la figure 2, ou être entraîné passivement par le chariot principal 110, comme dans l'exemple de la figure 3.

Le second miroir de renvoi 112 est orienté, de façon à diriger le faisceau intermédiaire vers le haut. Il est par ailleurs prévu deux miroirs supplémentaires 113, 113', logés dans les coins du bras 118, qui sont aptes à renvoyer le faisceau d'usinage f₃ vers la face supérieure 104B de l'élément fixe 104.

En service, le premier miroir reçoit le faisceau, non représenté, émis par le laser, puis dirige le faisceau intermédiaire f₂ vers le miroir 112. Le faisceau d'usinage f₃ est alors renvoyé vers le haut, en direction du miroir 113, puis horizontalement en direction du miroir 113'.

Enfin, ce miroir 113' dirige le faisceau d'usinage f₃ vers le bas, via l'objectif de focalisation 116. De la sorte, il est possible de disposer les pièces à traiter sur la face supérieure 104B de l'élément fixe 104, qui assure ainsi une double fonction de motorisation et de support des pièces.

L'invention n'est pas limitée aux exemples décrits et représentés.

Par ailleurs, l'orientation angulaire de chaque miroir peut être modifiée. De la sorte, ce miroir est alors mobile, en rotation, par rapport au bras ou au chariot qui le supporte.

L'invention permet de réaliser les objectifs précédemment mentionnés.

En effet, il est possible de conférer à l'élément fixe inducteur des dimensions importantes. Par conséquent, les chariots mobiles sont susceptibles de se déplacer sur de grandes surfaces, de sorte que le positionnement des miroirs de renvoi peut être modifié de façon particulièrement souple.

En outre, l'utilisation d'au moins un moteur linéaire permet de faire appel à un faible nombre d'éléments constitutifs, ce qui est avantageux, notamment en termes de jeux fonctionnels. De surcroît, aucun de ces éléments constitutifs n'est susceptible de se déformer, en service, ce qui confère un positionnement très précis aux différents miroirs de renvoi.

Enfin, l'emploi d'un tel moteur linéaire assure l'existence de frottements faibles, grâce à l'utilisation d'un coussin d'air interposé entre les faces en regard de l'inducteur et de l'induit.

## Revendications

1. Dispositif d'usinage de pièces à l'aide d'un faisceau laser, comprenant un châssis, un laser (2 ; 52) apte à émettre un faisceau laser (f₁), des premier et second miroirs de renvoi, montés sur ce châssis, le premier miroir de renvoi (8 ; 58 ; 108) étant apte à être placé sur le trajet dudit faisceau émis (f₁), afin de renvoyer un faisceau intermédiaire (f₂), alors que le second miroir de renvoi (12 ; 62 ; 112) est apte à être placé sur le trajet de ce faisceau intermédiaire, de façon à diriger un faisceau d'usinage (f₃) vers les pièces à traiter, ainsi que des moyens permettant de déplacer ces miroirs de renvoi par rapport au châssis, ces moyens de déplacement comprenant au moins un moteur linéaire principal (4, 10 ; 54, 60 ; 104, 110) .

2. Dispositif selon la revendication 1, **caractérisé en ce que** le moteur linéaire principal comprend un élément fixe (4 ; 54 ; 104), ainsi qu'un élément mobile (10 ; 60 ; 110), apte à se déplacer par rapport à cet élément fixe selon deux directions perpendiculaires entre elles (X-X', Y-Y'), au moins l'un (12 ; 62 ; 112) des deux miroirs de renvoi étant solidaire, au moins en translation, de cet élément mobile, et **en ce qu'**il est prévu des moyens d'alignement (6 ; 68 ; 118) permettant de diriger, en service, le faisceau intermédiaire (f₂) vers le second miroir de renvoi (12 ; 62 ; 112).

3. Dispositif selon la revendication 2, **caractérisé en ce que** l'élément mobile (10 : 60 ; 110) du moteur linéaire principal peut être déplacé, en service, selon la direction (Y-Y') du faisceau intermédiaire, et selon une direction (X-X') perpendiculaire à celle du faisceau intermédiaire.

4. Dispositif selon la revendication 2 ou 3, **caractérisé en ce que** le second miroir de renvoi (12 ; 62 ; 112) est solidaire, au moins en translation, de l'élément mobile.

5. Dispositif selon la revendication 4, **caractérisé en ce que** le second miroir (12) est monté sur l'élément mobile (10) du moteur linéaire principal.

6. Dispositif selon la revendication 4, **caractérisé en ce que** le second miroir (62 ; 112) est monté sur un bras (68 ; 118) solidaire de l'élément mobile (60 ; 110) du moteur linéaire principal.

7. Dispositif selon la revendication 6, **caractérisé en ce que** le bras (68) s'étend selon l'une (Y-Y') des directions de déplacement de l'élément mobile (60).

8. Dispositif selon la revendication 7, **caractérisé en ce que** l'élément fixe et l'élément mobile sont disposés dans un boîtier, le bras faisant saillie hors du boîtier en étant libre de coulisser selon sa direction principale par rapport à un élément de support disposé dans une ouverture du boîtier, cet élément de support étant propre à se déplacer transversalement par rapport à la direction principale du bras, des moyens étant prévus pour maintenir l'étanchéité du boîtier lors du déplacement de cet élément de support.

9. Dispositif selon la revendication 7 ou 8, **caractérisé en ce qu'**il est prévu deux chambres (80, 80') adjacentes, étanches à la lumière, dont chacune est fermée par une trappe (84, 84'), ces trappes étant aptes à être ouvertes de manière alternée, afin d'autoriser le passage du bras (68) vers une chambre correspondante.

10. Dispositif selon la revendication 9, **caractérisé en ce que** chaque chambre (80, 80') est munie d'une porte (82, 82') d'accès à un opérateur.

11. Dispositif selon la revendication 6, **caractérisé en ce que** le bras (118) présente une forme de U, vu de côté, et **en ce qu'**il est prévu au moins un miroir supplémentaire (113, 113'), permettant de diriger le faisceau d'usinage (f₃) vers une face supérieure (104B) de l'élément fixe (104).

12. Dispositif selon l'une quelconque des revendications 2 à 11, **caractérisé en ce** les moyens d'alignement comprennent un élément mobile annexe (6), sur lequel est monté le premier miroir de renvoi (8), cet élément mobile annexe appartenant à un moteur linéaire annexe (4, 6).

13. Dispositif selon la revendication 10, **caractérisé en ce que** l'élément fixe (4) du moteur linéaire annexe (4, 6) est confondu avec l'élément fixe du moteur linéaire principal (4, 10).

14. Dispositif selon l'une des revendications 6 à 11, **caractérisé en ce que** le premier miroir (58 ; 108) est solidaire en translation dudit bras (68 ; 118), selon la direction (X-X') perpendiculaire à la direction principale (Y-Y') du bras.

15. Dispositif selon l'une quelconque des revendications précédentes, **caractérisé en ce qu**'il est prévu un objectif de focalisation (16 ; 66 ; 116), apte à être interposé sur le trajet du faisceau d'usinage (f₃).
